# EUROPÄISCHE PATENTSCHRIFT

(11) **EP 2 135 822 B1**
(45) Veröffentlichungstag und Bekanntmachung des Hinweises auf die Patenterteilung: **21.08.2013**
(21) Anmeldenummer: 09007043.4
(22) Anmeldetag: 27.05.2009
(51) Int. Cl.: B65D 83/16, B65D 47/20, B05B 11/00

(54) **Abgabevorrichtung**
Dispensing device
Dispositif de dépôt

(30) Priorität: 20.06.2008 DE 102008029006
(43) Veröffentlichungstag der Anmeldung: 23.12.2009
(73) Patentinhaber: Aptar Dortmund GmbH, 44319 Dortmund (DE)
(72) Erfinder: Neuhaus, Reinhard, 58675 Herner (DE)
(74) Vertreter: Von Rohr

(56) Entgegenhaltungen:
- WO-A2-2007/104561
- DE-A1-102005 033 650

## Beschreibung

Die vorliegende Erfindung betrifft eine Abgabevorrichtung für eine vorzugsweise kosmetische Flüssigkeit gemäß dem Oberbegriff des Anspruchs 1 sowie ein Verfahren zur Herstellung einer solchen Vorrichtung gemäß dem Oberbegriff des Anspruchs 13.

Unter dem Begriff "Abgabevorrichtung" ist bei der vorliegenden Erfindung insbesondere ein Abgabekopf zu verstehen, der vorzugsweise an einem Behälter bzw. dessen Abgabeventil oder an einer handbetätigten Pumpe angebracht oder anbringbar ist. Insbesondere kann es ich auch um einen Druckbehälter, eine Spenderpumpe o. dgl. handeln. Die Abgabevorrichtung dient vorzugsweise der nicht-sprühenden Aus- bzw. Abgabe einer vorzugsweise kosmetischen Flüssigkeit. Jedoch kann es sich auch um eine Dosierpumpe bzw. handbetätigte Pumpe oder jede sonstige Abgabevorrichtung, wie einen Behälter, Sprühkopf, Spender oder dergleichen, insbesondere für eine kosmetische Flüssigkeit, handeln.

Unter dem Begriff "Flüssigkeit" sind insbesondere auch Suspensionen und Fluide, ggf. mit Gasphasen, zu verstehen. Die Flüssigkeit kann als Paste, Strahl oder Nebel oder in sonstiger Weise, beispielsweise als Schaum oder Gel, ausgegeben werden.

Vorzugsweise wird die Abgabevorrichtung für eine kosmetische Flüssigkeit eingesetzt. Unter dem Begriff "kosmetische Flüssigkeit" sind in einem engeren Sinn Kosmetika, Haarspray, Haarlack, Deodorant, Rasierschaum, Farbspray, Sonnen- oder Hautpflegemittel, generell Mittel zur Schönheitspflege, o. dgl. zu verstehen. Vorzugsweise werden in einem weiteren Sinn aber auch sonstige Körper- oder Haarpflegeprodukte umfaßt.

Beispielsweise kann es sich bei der Flüssigkeit aber auch um Reinigungsmittel oder Schmiermittel oder sonstige Flüssigkeiten, beispielsweise Luftverbesserer, und insbesondere auch um andere technische Flüssigkeiten und Fluide, wie Rostlöser o. dgl., handeln. Nachfolgend wird jedoch aus Vereinfachungsgründen und aufgrund des Nutzungsschwerpunkts oft nur von kosmetischer Flüssigkeit gesprochen.

Bei heutigen Abgabevorrichtungen zur Abgabe von insbesondere aufschäumenden oder aufgeschäumten Flüssigkeiten, wie Rasierschaum, oder bei Spenderpumpen besteht häufig das Problem, daß die Flüssigkeiten bzw, daraus gebildete Produkte nach Beendigung der eigentlichen Abgabe nachträglich austreten, insbesondere nachschäumen oder nachtropfen. Dieses Problem ist besonders bei Rasierschaum o. dgl. eklatant, tritt jedoch auch bei nicht aufgeschäumten bzw. nicht aufschäumenden Flüssigkeiten auf und kann insbesondere zu unerwünschten Verschmutzungen der Abgabevorrichtungen führen.

Die WO 2007/104561 A2 offenbart eine Abgabevorrichtung gemäß dem Oberbegriff des Anspruchs 1 Gemäß einer Ausführungsvariante ist die Abgabevorrichtung als Sprühkopf mit einem Auslaßventil zum Verhindern eines nachträglichen Austretens von Flüssigkeit oder Schaum ausgebildet. Das Auslaßventil weist ein elastisch verformbares, flächiges Ventilelement auf, das eine Abgabeöffnung verschließt. Das Ventilelement kann durch einen zusätzlichen Anschlag in seine Schließstellung vorgespannt sein. Die Materialien der Bauteile sind so gewählt, dass ein Material des zweiten Bauteils nur nach Vorbehandlung des ersten Bauteilmaterials durch Anspritzen des zweiten Materials eine Verbindung an den Vorbehandlungsstellen mit dem ersten Material eingeht.

Die DE 10 2005 033 650 A1 offenbart eine Atemmaskeneinrichtung und ein Verfahren zu deren Herstellung. Eine Masken-Hartschale aus Thermoplastischen Kunststoff wird zur Verbindung mit einem Elastomer vorbehandelt, da die verwendeten Materialien nicht ohne Vorbehandlung miteinander verbindbar sind. Das Elastomer wird gegen Bereiche der Maske gespritzt, wobei unbehandelte Bereiche zusätzlich durch Aufbringen eines Trennmittels die Ablösung der beiden Materialien voneinander nach Herstellung unterstützen sollen.

Der vorliegenden Erfindung liegt die Aufgabe zugrunde, eine verbesserte Abgabevorrichtung und ein Verfahren zu deren Herstellung anzugeben, so daß bei einfachem, kostengünstigem Ausbau optimale Materialkombinationen und/oder eine haltbare und/oder dichte Verbindung von Materialien insbesondere nur in gewünschten Bereichen ermöglicht wird bzw. werden.

Die obige Aufgabe wird durch eine Abgabevorrichtung gemäß Anspruch 1 oder durch ein Verfahren gemäß Anspruch 13 gelöst. Vorteilhafte Weiterbildungen sind Gegenstand der Unteransprüche.

Ein Aspekt der vorliegenden Erfindung liegt darin, daß bei der Abgabevorrichtung ein erstes Material in einem Bereich vorbehandelt wird und anschließend ein zweites Material unmittelbar gegen das erste Material gespritzt und dadurch mit dem ersten Material fest verbunden wird, wobei die beiden Materialien im vorbehandelten Bereich nicht verbunden sind und ausschließlich im vorbehandelten Bereich voneinander lösbar sind. So kann auf sehr einfache Art und Weise im vorbehandelten Bereich ein Lösen der beiden Materialien voneinander und damit insbesondere die Bildung eines Auslaßkanals ermöglicht werden.

Die Vorbehandlung erfolgt insbesondere durch Aufbringen einer Beschichtung, Zwischenlage oder Folie, besonders bevorzugt einer Prägefolie bzw. Heißsiegelfolie, die insbesondere mit dem ersten Material fest verbunden und/oder mit dem zweiten Material nicht verbunden oder verbindbar ist. Dies gestattet eine sehr einfache, kostengünstige und/oder schnelle Herstellung.

Die vorschlagsgemäße Lösung gestattet optimale Materialpaarungen. Insbesondere können auch Werkstoffe verwendet werden, die sich miteinander fest verbinden, um Bauteile zu bilden, die sich partiell voneinander lösen können.

Weitere Vorteile, Merkmale, Eigenschaften und Aspekte der vorliegenden Erfindung ergeben sich aus den Ansprüchen und der folgenden Beschreibung bevorzugter Ausführungsformen anhand der Zeichnung. Es zeigt:
- Fig. 1: einen schematischen Schnitt einer vorschlagsgemäßen Abgabevorrichtung mit einem Behälter gemäß einer ersten Ausfiihrungsfonn;
- Fig. 2: eine perspektivische Ansicht eines Gehäuseteils der Abgabevorrichtung;
- Fig. 3: eine andere perspektivische Ansicht des etwas modifizierten Gehäuseteils der Abgabevorrichtung;
- Fig. 4: einen schematischen Schnitt eines Betätigungselements der Abgabevorrichtung;
- Fig. 5: einen schematischen Schnitt eines Gehäuseteils der vorschlagsgemäßen Abgabevorrichtung gemäß einer zweiten Ausführungsform;
- Fig. 6: einen schematischen Schnitt eines Bauteils der Abgabevorrichtung gemäß einer dritten Ausführungsform;
- Fig. 7: eine perspektivische Ansicht des Bauteils; und
- Fig. 8: einen Horizontalschnitt des Bauteils.

In den teilweise nicht maßstabsgerechten, nur schematischen Figuren werden für gleiche oder ähnliche Teile dieselben Bezugszeichen verwendet, wobei entsprechende oder vergleichbare Eigenschaften und Vorteile erreicht werden, auch wenn eine wiederholte Beschreibung weggelassen ist.

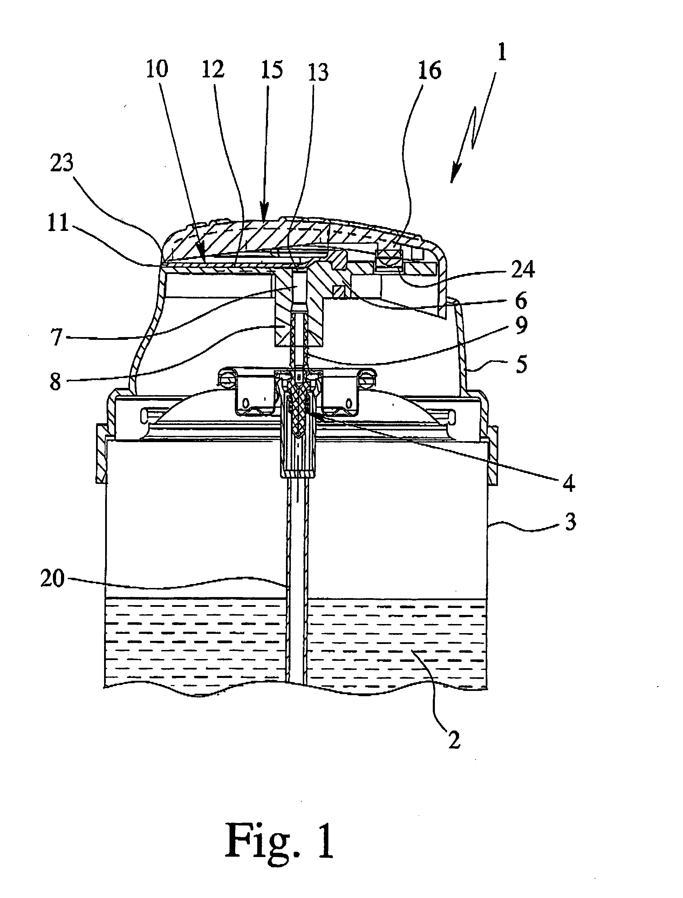

Fig. 1 zeigt in einem schematischen Schnitt eine erste Ausführungsform einer vorschlagsgemäßen Abgabevorrichtung 1, die vorzugsweise als Abgabekopf zur Abgabe einer Flüssigkeit 2 im eingangs genannten Sinn ausgebildet ist.

Die Flüssigkeit 2 kann wesentlich höher viskos sein als Wasser oder ggf. sogar pastös. Insbesondere kann sie einen Schaum oder Gel bilden. Die Flüssigkeit 2 kann auch Gas in flüssiger und/oder sonstiger Form enthalten.

Insbesondere ist die Abgabevorrichtung 1 zur nicht-sprühenden Abgabe der Flüssigkeit 2 ausgebildet. Insbesondere erfolgt eine Ausgabe der Flüssigkeit 2 als Schaum, vorzugsweise als Rasierschaum o. dgl. Die Flüssigkeit 2 ist hierzu insbesondere selbstaufschäumend ausgebildet und/oder wird bei der Abgabe aufgeschäumt.

Jedoch kann die Flüssigkeit 2 grundsätzlich auch im nicht-aufgeschäumten Zustand abgegeben werden und insbesondere auch nicht-aufschäumend ausgebildet sein. Weiter ist es auch möglich, daß die Flüssigkeit 2 nur ganz gering auf schäumt, so daß das Aufschäumen beispielsweise lediglich das Volumen etwas vergrößert, aber im wesentlichen eine flüssige oder pastöse Konsistenz bei der Abgabe beibehalten wird.

Es ist anzumerken, daß an Stelle der beispielhaft erläuterten Abgabe der Flüssigkeit 2 als Schaum grundsätzlich auch jede sonstige Abgabe der Flüssigkeit 2 - ggf. auch als pastöse Masse, als Gel, als Tropfen, als Strahl oder als Sprühnebel - in Frage kommt.

Die Abgabevorrichtung 1 ist vorzugsweise mit einem Reservoir, insbesondere einem Behälter 3, für die auszugebende Flüssigkeit 2 versehen oder verbunden. Das Reservoir kann also einen Teil der Abgabevorrichtung 1 bilden oder kann an diese angeschlossen sein.

Beim Darstellungsbeispiel ist das Reservoir als vorzugsweise starrer Behälter 3, insbesondere als Druckbehälter ausgebildet. Der Behälter 3 ist insbesondere länglich und/oder zylindrisch und/oder starr - besonders bevorzugt als metallische Dose - für die Flüssigkeit 2 ausgebildet.

Die Flüssigkeit 2 im Reservoir ist entweder unter Druck setzbar oder steht unter Druck. Insbesondere enthält der Behälter 3 oder die Flüssigkeit 2 ein geeignetes Treibmittel, vorzugsweise ein flüchtiges und/oder brennbares Treibmittel, komprimiertes Gas und/oder Kohlendioxid.

Der Behälter 3 weist besonders bevorzugt stirnseitig ein Abgabeventil 4 auf, an das die Abgabevorrichtung 1 bzw. der davon gebildete Abgabekopf angeschlossen oder anschließbar ist,

Beim Darstellungsbeispiel weist die Abgabevorrichtung 1 vorzugsweise ein Gehäuseteil 5 auf, das mit dem Reservoir bzw. Behälter 3 verbunden oder verbindbar, besonders bevorzugt klemmend und/oder rastend darauf aufsetzbar ist.

Die Abgabevorrichtung 1 weist weiter ein vorzugsweise in das Gehäuseteil 5 eingesetztes und/oder davon gehaltenes oder gebildetes Bauteil 6 auf, das einen Förderkanal 7 bildet und an das Abgabeventil 4 anschließbar bzw. angeschlossen ist. Beim Darstellungsbeispiel ist das Bauteil 6 mit einem entsprechenden Anschlußabschnitt 8 zur insbesondere steckbaren Verbindung mit dem Abgabeventil 4 bzw. einem Stutzen 9 des Abgabeventils 4 versehen.

Bei der ersten Ausführungsform sind das Gehäuseteil 5 und das Bauteil 6 vorzugsweise einstückig miteinander ausgebildet, insbesondere wobei das Gehäuseteil 5 das Bauteil 6 kippbar bzw. niederdrückbar hält.

Die Abgabevorrichtung 1 weist beim Darstellungsbeispiel ein Auslaßventil 10 auf, das insbesondere dem Förderkanal 7 und/oder einem Abgabeende 11 der Abgabevorrichtung 1 zugeordnet ist.

Besonders bevorzugt weist das Auslaßventil 10 ein Ventilelement 12 auf, das zum Öffnen und Schließen des Auslaßventils 10 zumindest partiell elastisch verformbar ist.

Besonders bevorzugt schließt sich keine Düse, kein weiterer Kanal o. dgl. an das Auslaßventil 10 bzw. dessen Ventilelement 12 bzw. an das Abgabeende 11 an. Vielmehr öffnen sich diese vorzugsweise "ins Freie". So kann die Flüssigkeit 2 nach Austritt aus dem Auslaßventil 10 von einem nicht dargestellten Benutzer vorzugsweise unmittelbar aufgenommen bzw. benutzt werden. Beim Darstellungsbeispiel überdeckt das Ventilelement 12 eine Abgabeöffnung 13 des Förderkanals 7 und/oder erstreckt sich bis zum Abgabeende 11 bzw. bildet dieses.

Die Abgabeöffnung 13 des Kanals endet vorzugsweise in der Wandung 14 des Bauteils 6 bzw. Förderkanals 7, die vom Ventilelement 12 zumindest im Bereich der Abgabeöffnung 13 abgedeckt bzw. abdeckbar ist, Vorzugsweise ist die Wandung 14 von dem Gehäuseteil 5 oder Bauteil 6 gebildet.

Das Auslaßventil 10 ist vorzugsweise derart ausgebildet, daß es in Abhängigkeit vom anstehenden Flüssigkeitsdruck, insbesondere bei Überschreiten eines vorbestimmten Mindestdrucks, öffnet. Besonders bevorzugt ist dieser Mindestdruck höher als ein Aufschäumdruck der vorzugsweise selbstaufschäumenden Flüssigkeit 2, Hingegen ist dann der Abgabedruck (bei geöffnetem Abgabeventil 4) und damit der anstehende Flüssigkeitsdruck wiederum höher als der Mindestdruck, so daß zur gewünschten Flüssigkeitsabgabe und Erzeugung bzw. Ausgabe von Schaum das Auslaßventil 10 auch öffnet.

Das Bauteil 6 oder Gehäuseteil 5 bildet vorzugsweise einen federnd nachgiebigen, beispielsweise kippbaren und/oder zungenartigen Bereich bzw. Abschnitt, so daß dieses mit dem Anschlußabschnitt 8 zum Abgabeventil 4 hin verlagerbar und dadurch das Abgabeventil 4 öffenbar ist.

Die Abgabevorrichtung 1 weist ferner vorzugsweise ein Betätigungselement 15 auf, das beim Darstellungsbeispiel als separate Teil ausgeführt ist. Jedoch sind auch andere konstruktive Lösungen möglich.

Das Öffnen des Abgabeventils 4 erfolgt vorzugsweise durch Niederdrücken und/oder Kippen des oben genannten, federnd nachgiebigen Bereich bzw. Bauteils 6 bzw. des Anschlußabschnitts 8 bzw. des Betätigungselements 15. Beispielsweise kann das Betätigungselement 15 hierzu über einen Betätigungsabschnitt 16 auf das Bauteil 6 einwirken.

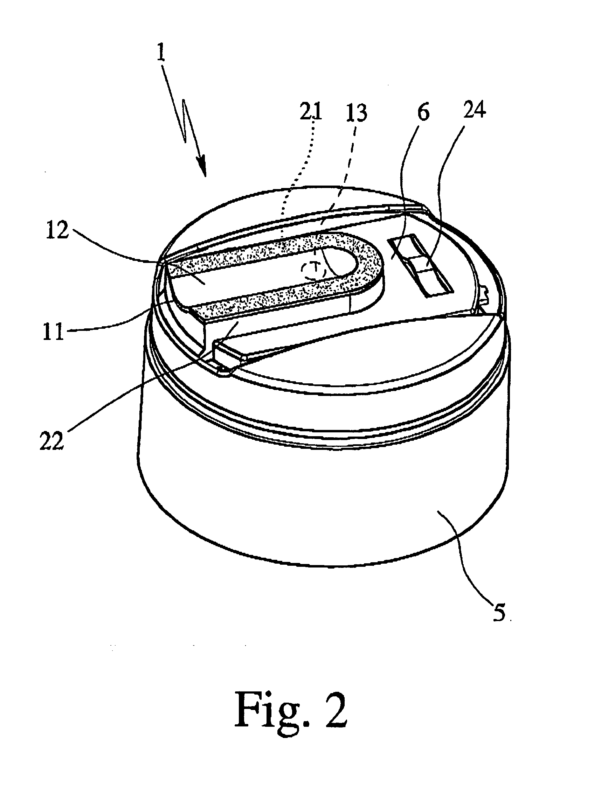

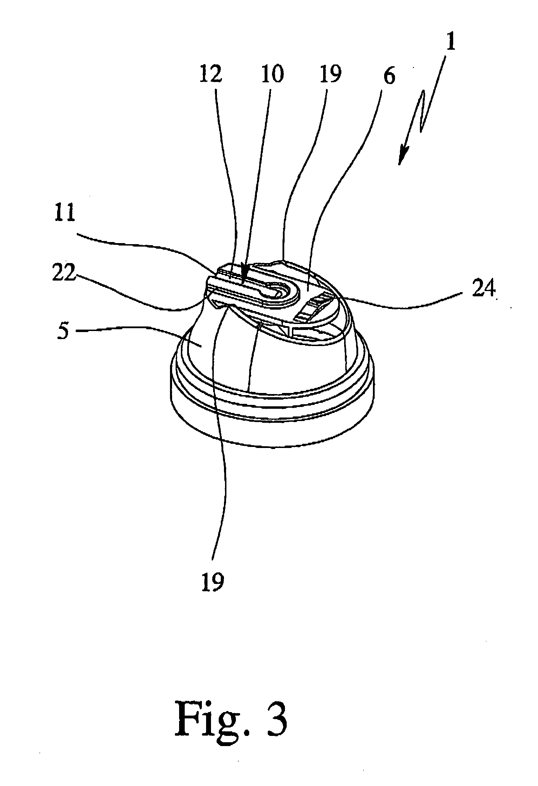

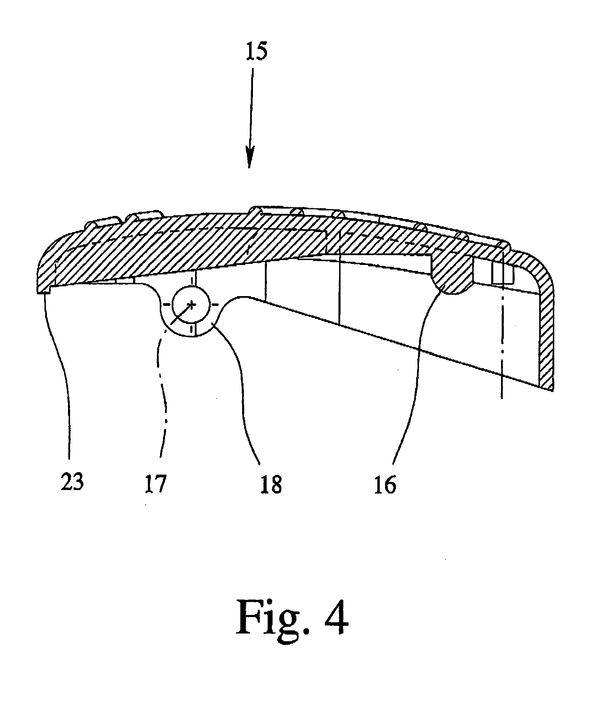

Das Betätigungselement 15 ist beim Darstellungsbeispiel vorzugsweise schwenkbar bzw, kippbar. Fig. 2 zeigt in einer perspektivischen Ansicht das Gehäuseteil 5 der Abgabevorrichtung 1. Fig. 3 zeigt in einer anderen perspektivischen Darstellung eine Ausführungsvariante des Gehäuseteils 5. Fig. 4 zeigt in einem vergrößerten, schematischen Schnitt das Betätigungselement 15 ohne weitere Komponenten der Abgabevorrichtung 1.

Beim Darstellungsbeispiel ist das Betätigungselement 15 um eine Schwenkachse 17 schwenkbar. Hierzu ist das Betätigungselement 15 beispielsweise mit Lagerabschnitten oder Lageraugen 18 versehen, die beispielsweise von Halteabschnitten 19 des Gehäuseteils 4 lagerbar sind, wie in Fig. 3 angedeutet. In der Variante gemäß Fig. 2 sind diese Halteabschnitte nicht vorgesehen. Statt dessen ist hier dann eine andere konstruktive Lösung zur Kipplagerung des Betätigungselements 15 vorgesehen, die aber nicht näher dargestellt ist.

Vorzugsweise liegt die Schwenkachse 17 im wesentlichen zwischen dem Stutzen 9, dem Förderkanal 7 oder der Abgabeöffnung 13 einerseits und dem Abgabeende 11 (Auslaß) andererseits.

Durch Niederdrücken des Betätigungselements 15 (in den Fig. 1 und 4 auf rechten Seite) wird entsprechend das Bauteil 6 mit dem Anschlußabschnitt 8 nach unten bzw, zum Abgabeventil 4 hin verlagert, um dieses durch Betätigen des Stutzens 9 oder auf sonstige geeignete Weise zu öffnen.

Bei geöffnetem Abgabeventil 4 kann dann die im Reservoir bzw. Behälter 3 vorzugsweise unter Druck stehende Flüssigkeit 2 über eine Steigleitung 20 (Fig. 1) und das geöffnete Abgabeventil 4 in den Förderkanal 7 strömen. Insbesondere erfolgt dann im Förderkanal 7 ein zumindest erstes Aufschäumen der Flüssigkeit 2. Bedarfsweise kann hierzu auch eine nicht dargestellte Schaumbildungseinrichtung (zusätzlich oder alternativ) vorgesehen sein. Beispielsweise kann die Flüssigkeit 2 bzw. der Schaum durch ein nicht dargestelltes Gitter geführt und/oder durch Zuführung von Gas bzw. Luft (zusätzlich oder alternativ) aufgeschäumt werden.

Aufgrund des bei geöffnetem Abgabeventil 4 im Abgabekanal 7 herrschenden bzw. anstehenden Flüssigkeitsdrucks bzw. Abgabedrucks öffnet das Auslaßventil 10 vorzugsweise selbsttätig.

Bei entsprechendem Flüssigkeitsdruck öffnet das Auslaßventil 10 dadurch, daß sich das Ventilelement 12 zumindest teilweise von dem Bauteil 6 bzw. der Wandung 14 abhebt.

Besonders bevorzugt ist das Ventilelement 12 nämlich zumindest oder nur in einem Verbindungsbereich 21 (Fig. 2) fest und/oder dicht mit der Oberfläche des Bauteils 6 bzw. der Wandung 14 - insbesondere in einem Randbereich und/oder U-fönnigen Bereich - verbunden.

Die Abgabeöffnung 13 bzw. der Förderkanal 7 endet bei der ersten Ausführungsform vorzugsweise in einer rinnen- oder nutartigen bzw. konkaven Oberfläche der Wandung 14, Insbesondere öffnet sich die Abgabeöffnung 13 im Bereich des dem Abgabeende 11 entgegengesetzten Endes einer länglichen, von dem Bauteil 6 bzw. der Wandung 14 gebildeten Vertiefung, die insbesondere von einem vorzugsweise U-förmigen, insbesondere erhöhten Rand 22 und/oder dem Verbindungsbereich 21 umgeben ist. Der Rand 22 verläuft mit seinen beiden vorzugsweise parallelen Schenkeln in Richtung der Ausgaberichtung, also zum Abgabeende 11 hin.

Das Ventilelement 12 ist vorzugsweise zumindest im Bereich des Randes 22 mit dem Bauteil 6 fest und dicht gehalten und/oder verbunden, wie durch den Verbindungsbereich 21 in Fig. 2 schematisch angedeutet.

In dem Bereich von der Abgabeöffnung 13 zum Abgabeende 11 ist das Ventilelement 12 nicht mit der Wandung 14 verbunden, sondern kann sich bei entsprechenden Flüssigkeitsdruck insbesondere durch elastische Verformung abheben, insbesondere nach oben wölben, und eine kanalartige Verbindung (virtueller Auslaßkanal) in dem dazwischenliegenden Bereich, hier zwischen dem Förderkanal 7 bzw. dessen Abgabeöffnung 13 und dem Abgabeende 11 oder einen sonstigen Auslaß herzustellen oder freizugegeben. Dadurch öffnet sich das Auslaßventil 10 bzw. dieser Teil.

Die Flüssigkeit 2 kann dann durch das geöffnete Auslaßventil 10 nach außen bzw. ins Freie entweichen und besonders bevorzugt aufschäumen bzw. weiter aufschäumen oder ein Gel oder ein sonstiges Produkt bilden oder in flüssiger, pastöser oder sonstiger Form ausgegeben werden.

Das Abgabeventil 4 schließt bei Loslassen des Betätigungselements 15 vorzugsweise wieder selbsttätig. Beim Darstellungsbeispiel erfolgt die Rückstellung des Bauteils 6 bzw. Anschlußabschnitts 8 vorzugsweise ausschließlich durch Federkräfte des federnden Abschnitts.

Zusätzlich oder alternativ kann jedoch beispielsweise auch eine nicht dargestellt Rückstell- oder Schließfeder oder eine sonstige konstruktive Lösung eingesetzt werden.

Bedarfsweise kann es sich bei dem Abgabeventil 4 beispielsweise auch um ein Dosierventil oder eine sonstige Ventileinrichtung handeln.

Die Flüssigkeitsabgabe bzw. Schauzrxerzeugung endet, wenn der im Förderkanal 7 herrschende Flüssigkeitsdruck bzw. Abgabedruck wieder unter den Mindestdruck fällt, so daß das Auslaßventil 10 - insbesondere durch elastische Rückstellung des Ventilelements 12 - wieder schließt. Dies ist dann der Fall, wenn das Abgabeventil 4 - insbesondere durch Loslassen bzw. automatische Rückstellung des Abgabekopfs bzw. Betätigungselements 15 - wieder schließt und der Druck im Förderkanal 7 unter dem Mindestdruck sinkt. Das geschlossene bzw. sich schließende Auslaßventil 10 verhindert dann, daß noch im Kanal 7 befindliche Flüssigkeit 2 bzw. befindlicher Schaum der dgl. in unerwünschter Weise nachträglich austreten bzw. herausschäumen kann.

Vorzugsweise wird quasi ein "virtueller" Auslaßkanal zwischen zwei flächig aufeinanderliegenden Bauteilen, hier nämlich dem Bauteil 6 und dem Ventilelement 12, gebildet, der nur bei entsprechendem Flüssigkeitsdruck öffnet und selbsttätig wieder schließt und insbesondere eine Ventilfunktion realisiert und/oder das unerwünschte Nachströmen bzw. Nachströmen sehr effektiv verhindern kann.

Ein besonderer Vorteil des Auslaßventils 10 liegt darin, daß neben der Vermeidung eines nachträglichen Austritts der Flüssigkeit 2, insbesondere eines Nachschäumens, auch für den Benutzer eine sehr einfache Reinigung ermöglicht wird, da das Auslaßventil 10 vorzugsweise ein sauberes bzw. leicht zu reinigendes Abgabeende 12 bildet.

Beim Darstellungsbeispiel erfolgt die Flüssigkeitsausgabe vorzugsweise im wesentlichen quer, insbesondere senkrecht, zur Niederdrückrichtung bzw. Öffnungsrichtung des Abgabeventils 4 und/oder zumindest im wesentlichen horizontal oder quer zur Längsrichtung des Behälters 3.

Vorzugsweise erstreckt sich das Ventilelement 12 bis zum Abgabeende 11 und/oder bildet dieses, insbesondere zusammen mit dem Bauteil 6 bzw, der Wandung 14.

Weiter ist zu erwähnen, daß sich an das Abgabeende 11 vorzugsweise keine weitere, die Flüssigkeitsabgabe formende Einrichtung, wie eine Düse, ein Kanal oder dgl., anschließt. Dies schließt jedoch nicht aus, daß beispielsweise eine schalenartige Erweiterung, gehäuseseitige Vertiefung oder dgl., in die das Abgabeende 11 mündet, vorgesehen sein kann.

Gemäß einem weiteren Aspekt wird das Auslaßventil 10 bzw, dessen Ventilelement 12 bei unbetätigter Abgabevorrichtung 1 bzw. geschlossenen Abgabeventil 4 durch einen Anschlag 23 in die geschlossene Stellung - hier insbesondere gegen die Wandung 14 und/oder im Bereich des Abgabeendes 11- (zusätzlich) gedrückt bzw. vorgespannt. Beim Darstellungsbeispiel ist der Anschlag 23 vorzugsweise steg- oder rippenartig ausgebildet und/oder am Betätigungselement 15 angeordnet, insbesondere angeformt.

Im dargestellten, geschlossenen Zustand befindet sich das Betätigungselement 15 in der nicht gekippten bzw. oberen Position (Ausgangsposition), so daß der Anschlag 23 unmittelbar auf das Ventilelement 12 drückt und dadurch das Auslaßventil 10 (zusätzlich) geschlossen hält, wie in Fig. 1 gezeigt.

Das Betätigungselement 15 ist um die vorzugsweise horizontal bzw, bei der Darstellung gemäß Fig. 1 und 4 senkrecht zur Zeichenebene verlaufene Schwenkachse 17 verschwenkbar bzw. verkippbar. Die Schwenkachse 17 liegt vorzugsweise zwischen und/oder etwa in einer Ebene zwischen dem Anschlag 23 einerseits und dem auf das Bauteil 6 einwirkenden Betätigungsabschnitt 16 andererseits. Dementsprechend wird bei Betätigen bzw. Niederdrücken des Betätigungselements 15 aus der in Fig. 1 gezeigten Stellung der Betätigungsabschnitt 16 nach unten und der Anschlag 23 nach oben bzw. entgegengesetzt bewegt. Dementsprechend kann das Auslaßventil 10 ungehindert öffnen, auch wenn das Bauteil 6 bzw. das Auslaßventil 10 bei betätigter Abgabevorrichtung 1 nicht oder nur relativ wenig nach unten bzw. vom Anschlag 23 weg bewegt wird.

Besonders bevorzugt ist der Anschlag 23 bzw. das Betätigungselement 15 in seine Ausgangsstellung bzw. die das Auslaßventil 10 schließende Schließstellung vorgespannt. Beim Darstellungsbeispiel ist hierzu ein Federabschnitt 24 vorgesehen, der insbesondere am Bauteil 6 einstückig angeformt bzw. von diesem gebildet ist. Jedoch sind auch andere konstruktive Lösungen möglich.

Die vom Federabschnitt 24 bzw. einer sonstigen Einrichtung auf das Betätigungselement 15 ausgeübte Rückstellkraft ist vorzugsweise kleiner als die zum Niederdrücken des Bauteils 6 bzw. Anschlußabschnitts 8 und insbesondere die zum Öffnen des Abgabeventils 4 erforderliche Kraft. So kann erreicht werden, daß zunächst der Anschlag 23 vom Ventilelement 12 abgerückt bzw. seine auf das Ventilelement 12 ausgeübte Kraft verringert wird, bevor das Abgabeventil 4 öffnet.

Beim Darstellungsbeispiel ist das Betätigungselement 15 vorzugsweise als separates Teil ausgebildet, das insbesondere aufgesetzt, aufgesteckt, aufgeklemmt oder aufgerastet ist, insbesondere an den Halteabschnitten 19 (Fig. 3) schwenkbar gelagert bzw. gehalten.

Vorzugsweise ist das Betätigungselement 15 mit seinen Lagerabschnitten bzw. Lageraugen 18 auf beiden Seiten des Auslaßventils 10 bzw. Ventilelements 12 gelagert bzw. abgestützt und/oder auf die Halteabschnitte 19 aufrastbar bzw. aufgerastet.

Es sind aber auch andere konstruktive Lösungen möglich. Insbesondere kann das Betätigungselement 15 grundsätzlich auch auf sonstige Weise gelagert, elastisch verformbar und/oder an das Gehäuseteil 5 bzw. Bauteil 6 angeformt sein.

Nachfolgend werden weitere Ausmhrungsfbrmen der vorschlagsgemäßen Abgabevorrichtung 1 anhand der weiteren Figuren erläutert, wobei sich die folgende Beschreibung auf wesentliche Unterschiede oder neue Aspekte beschränkt. Die bisherigen Ausführungen und Erläuterungen gelten insbesondere entsprechend oder ergänzend.

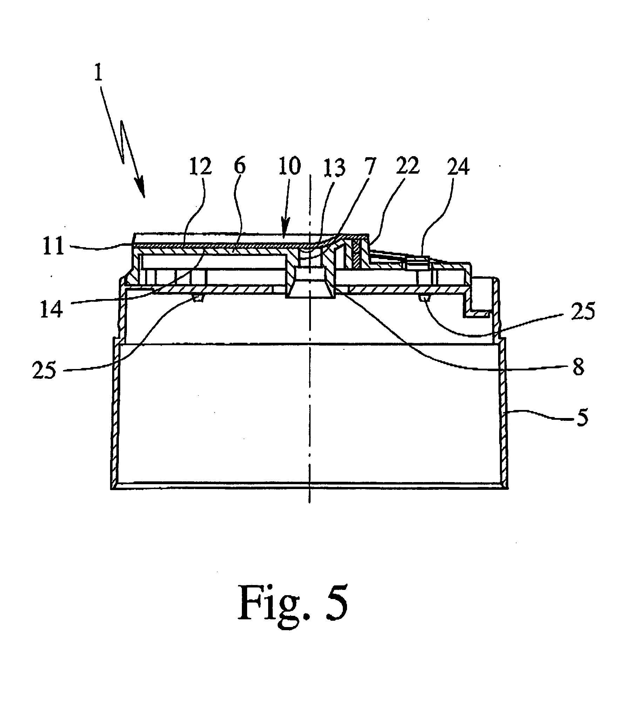

Fig. 5 zeigt in einem schematischen Schnitt eine zweite Ausführungsform der vorschlagsgemäßen Abgabevorrichtung 1, wobei aus Vereinfachungsgründen der zugeordnete Behälter 3 mit dem Abgabeventil 4 nicht dargestellt ist.

Bei der zweiten Ausführungsform ist das Bauteil 6 nicht einstückig mit dem Gehäuseteil 5 ausgebildet, sondern als separates Bauteil.

Das Bauteil 6 ist vorzugsweise unlösbar, rastend und/oder klemmend mit dem Gehäuseteil 5, hier einen insbesondere zungen- oder plattenartigen Abschnitt des Gehäuseteils 5 verbunden, der vorzugsweise niederdrückbar bzw. schwenkbar ist, um das in Fig. 5 nicht dargestellte, zugeordnete Abgabeventil 4 betätigen bzw. öffnen zu können. Zur Verbindung des Bauteils 6 mit dem Gehäuseteil 5 sind beim Darstellungsbeispiel vorzugsweise Verbindungsmittel 25 vorgesehen, die am Gehäuseteil 5 und/oder Bauteil 6 angeordnet, angebracht oder angeformt und mit dem jeweils anderen Teil verbindbar sind. Jedoch sind auch andere konstruktive Lösungen möglich.

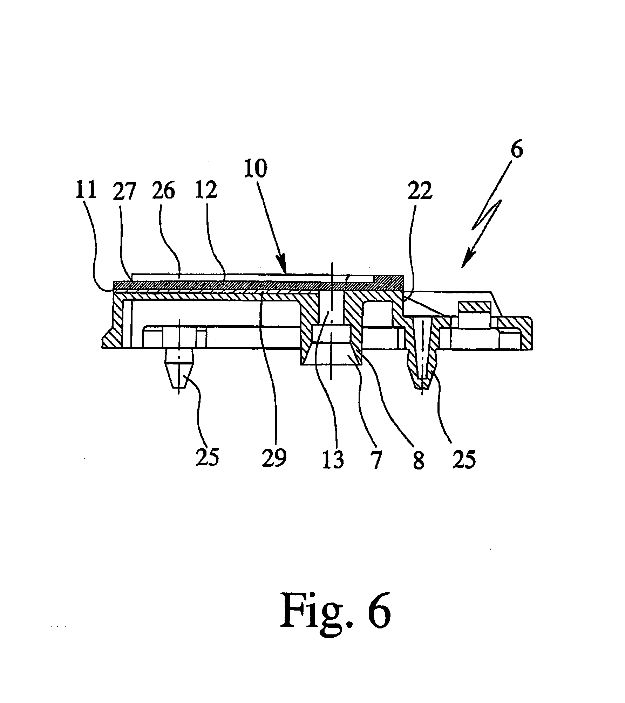

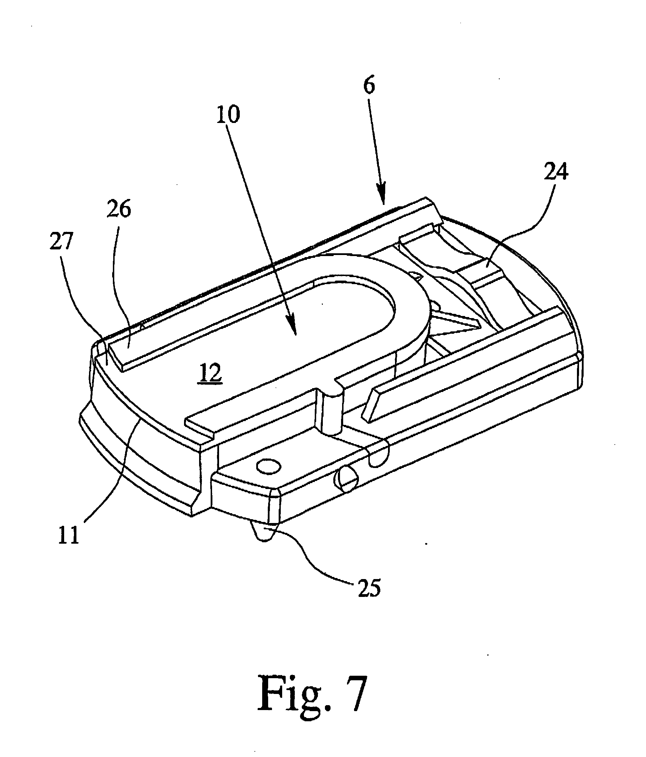

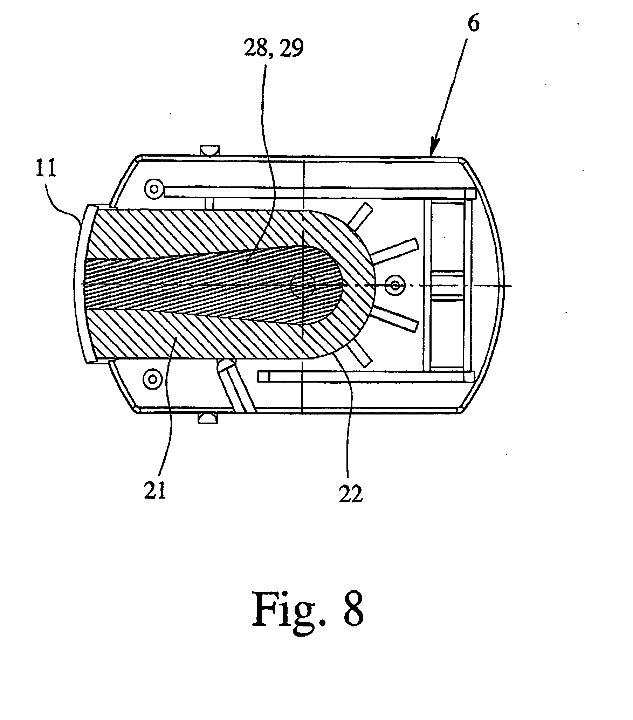

Fig. 6 bis 8 zeigen eine dritte Ausführungsform der vorschlagsgemäßen Abgabevorrichtung 1, und zwar aus Vereinfachungsgründen lediglich das Bauteil 6 mit dem Auslaßventil 10. Fig. 6 zeigt einen schematischen Vertikalschnitt. Fig. 7 zeigt eine perspektivische Ansicht. Fig. 8 zeigt einen schematischen Horizontalschnitt.

Bei der dritten Ausfiihrungsform ist bzw. sind die Wandung 14 und/oder das Ventilelement 12 - zumindest in dem flächig aufeinanderliegenden Bereich bzw. Ventilbereich - zumindest im wesentlichen eben ausgebildet. Jedoch sind grundsätzlich auch andere konstruktive Formen oder Anordnungen, beispielsweise eine zumindest bereichsweise konvexe Ausbildung oder ringartige oder zylinderartige Ausbildung des Ventilelements 12 und eine dazu komplementäre Ausbildung der Wandung 14 oder umgekehrt möglich.

Bei der dritten Ausführungsform ist das Ventilelement 12 optional mit einer Randverstärkung 26 versehen. Die Randverstärkung 26 kann beispielsweise entlang des Rands 22 der Wandung 14 und/oder im wesentlichen oberhalb oder entlang des Verbindungsbereichs 21 verlaufen.

Vorzugsweise ist das Ventilelement 12 im Bereich des Abgabeendes 11 möglichst gleichmäßig dick, vorzugsweise relativ dünn, ausgebildet, um ein gleichmäßiges Aufliegen des vorzugsweise stegartigen Anschlags 23 in der Schließstellung zu ermöglichen. Wenn die Randverstärkung 26 vorgesehen ist, weist diese dann vorzugsweise eine Aussparung oder Ausnehmung 27 im Bereich des Abgabeendes 11 auf, wie in Fig. 6 und 7 angedeutet. Jedoch sind auch andere konstruktive Lösungen möglich.

Es ist anzumerken, daß sich der Anschlag 23 vorzugsweise über die gesamte Breite des Ventilelements 12 bzw. des Abgabeendes 11 erstreckt. Jedoch sind auch andere konstruktive Lösungen möglich.

Besonders bevorzugt endet die Wandung 14, das Ventilelement 12 und der Anschlag 23 bei geschlossenem Auslaßventil 10 zumindest im wesentlichen in einer gemeinsamen Ebene oder Fläche. Dies ist einem sauberen und/oder gut dichtenden Abschluß bzw. Auslaß zuträglich,

Die nachfolgenden Ausführungsformen beziehen sich insbesondere auf alle gezeigten Ausführungsformen und -varianten sowie generell auf die Erfindung.

Das Gehäuseteil 5 und/oder Bauteil 6 ist bzw. sind vorzugsweise spritzgegossen bzw. aus Kunststoff hergestellt.

Das Bauteil 6 ist aus einem ersten Material, insbesondere einem relativ starren Kunststoffmaterial, hergestellt. Bevorzugt wird ein Polyolephin, insbesondere PP (Polypropylen) oder PE (polymethylen) eingesetzt.

Das Ventilelement 12, das bei der vorliegenden Erfindung generell auch als zweites Bauteil bezeichnet wird, ist aus einem zweiten Material und/oder Spritzen hergestellt. Insbesondere handelt es sich bei dem zweiten Material um ein Elastomer und/oder einen Thermoplasten, Bevorzugt wird TPE (thermoplastisches Elastomer) oder TPV o. dgl. eingesetzt. Insbesondere handelt es sich um ein flexibles Material. Das zweite Material ist insbesondere flexibel oder weicher als das erste Material. Dies ist insbesondere bei den dargestellten Ausführungsformen wünschenswert, da das daraus gebildete Ventilelement 12 eine gewisse elastische Verformbarkeit und/oder Flexibilität im Gegensatz, zu der von dem Bauteil 6 gebildeten Wandung 14 aufweisen soll.

Dementsprechend sind das erste Material und das zweite Material unterschiedlich, unterscheiden sich also insbesondere hinsichtlich ihrer Zusammensetzung und/oder Eigenschaften. Jedoch sind grundsätzlich auch andere Konstruktionen möglich, bei denen für das erste Material und das zweite Material das gleiche bzw. das selbe Material verwendet werden kann.

Erfindungsgemäß wird für das erste Material und das zweite Material eine Materialpaarung gewählt, so daß die beiden Materialien direkt durch Spritzen miteinander fest verbindbar sind. Erfindungsgemäß ist eine derartige feste Verbindung der beiden Materialien ohne Vorbehandlung, insbesondere Haftvermittler, vorzugsweise Bearbeitung o. dgl. erreichbar.

Besonders bevorzugt erfolgt das Anspritzen durch die sogenannte "BI-Injection", bei der zunächst ein Material (das erste Material) in eine Spritzform gespritzt und dann das andere Material (das zweite Material) insbesondere in derselben Spritzform gegen das zuvor gespritzte Material gespritzt wird. Jedoch ist es grundsätzlich auch möglich, daß die beiden Materialien grundsätzlich fast gleichzeitig in dieselbe Spritzform gespritzt werden.

Durch das Spritzen der beiden Materialien gegeneinander wird die gewünschte feste Verbindung im Verbindungsbereich 21 erreicht. Es sind keine weiteren Maßnahmen zur Verbindung der beiden Materialien bzw. Bauteile (hier des Bauteils 6 und des Ventilelements 12) in dem gewünschten Verbindungsbereichs 21 erforderlich, um die gewünschte Festigkeit, chemische Verbindung, chemische Beständigkeit und/oder Dichtigkeit zu erreichen. Jedoch können grundsätzlich auch ergänzende oder alternativ sonstige Maßnahmen, wie ein Verpressen, Einklemmen, Verschweißen o. dgl. eingesetzt werden.

Gemäß einem Aspekt der vorliegenden Erfindung wird das erste Material (hier die Wandung 14 des Bauteils 6) in einem Bereich 28, der schematisch in Fig. 8 dargestellt ist, vorbehandelt, um zu verhindern, daß sich die beiden Materialien und damit die beiden Bauteile in diesen Bereich 28 miteinander verbinden. Bei den beschriebenen Ausführungsformen wird also erreicht, daß das das zweite Bauteil bildende Ventilelement 12 im vorbehandelten Bereich 28 nicht mit dem ersten Bauteil 6 verbunden wird bzw. sich ausschließlich oder zumindest im vorbehandelten Bereich 28 von dem ersten Bauteil 6 lösen kann. So kann vorschlagsgemäß erreicht werden, daß das zweite Bauteil (Ventilelement 12), das unmittelbar gegen das erste Bauteil 6 gespritzt (oder alternativ geklebt) und dadurch mit diesem fest verbunden wird, sich im vorbehandelten Bereich 27 nicht mit diesem verbindet und/oder vorzugsweise ausschließlich im vorbehandelten Bereich 28 wieder von diesem lösbar ist.

Die vorschlagsgemäße Vorbehandlung kann auch als eine Art Passivierung oder Einbringen einer Trennschicht verstanden werden, die ein Verbinden des ersten und zweiten Materials bzw. der beiden Bauteile 6, 12 im vorbehandelten Bereich 28 verhindert.

Vorzugsweise wird das erste Material bzw. Bauteil 6 durch Aufbringen einer Beschichtung, Zwischenlage oder Folie 29 vorbehandelt, wie in dem schematischen Schnitt gemäß Fig. 6 und der Draufsicht gemäß Fig. 8 angedeutet. Insbesondere wird für die Vorbehandlung eine Prägefolie oder Heißsiegelfolie eingesetzt, die das erste Material bzw. Bauteil 6 in dem gewünschten Bereich 28 abdeckt und/oder insbesondere durch Druck und/oder Hitze mit dem ersten Material bzw. Bauteil 6 zumindest bereichsweise verbunden wird.

Je nach Verfahrensablauf kann das Verbinden mit der Folie 29 oder einer sonstigen Abdeckung mit dem ersten Material bzw. Bauteil 6 direkt in der Spritzform und/oder aufgrund der vorhandenen Restwärme nach dem Spritzen und/oder durch zusätzliche bzw. gezielte Wärmeeinwirkung (z. B. Infraroteinstrahlung) und/oder Druckeinwirkung erreicht und/oder gefördert werden.

Alternativ ist es grundsätzlich jedoch auch möglich, die Abdeckung bzw. Folie 29 o. dgl. in dem vorzubehandelnden Bereich 28 nur leicht anhaften oder gar lose aufliegen zu lassen.

Bedarfsweise kann die Abdeckung bzw. Folie 29 auch durch nicht dargestellte Haltestege o. dgl. in gewünschter Weise auf der Wandung 14 bzw. dem ersten Material oder Bauteil 6 positioniert und ggf. auch während des Anspritzens des zweiten Materials bzw. Bauteils (Ventilelements 12) gehalten oder fixiert werden.

Besonders bevorzugt besteht die Beschichtung, Zwischenlage oder Folie 29 aus einem zusätzlichen Material und/oder aus unterschiedlichen Materialien, um vorzugsweise ein Verbinden mit dem ersten Material bzw. Bauteil 6 zu erreichen und/oder ein Verbinden mit dem zweiten Material bzw. Bauteil (Ventilelement 12) zu vermeiden.

Bedarfsweise kann die Beschichtung oder Zwischenlage auch durch Aufdrucken, Aufkleben oder auf sonstige geeignete Art und Weise aufgebracht werden.

Wenn die Beschichtung im Vorbehandlungsbereich 28 aus Farbe oder einer sonstigen Flüssigkeit besteht oder gebildet wird, kann diese auch auf jede sonstige geeignete Art und Weise im vorzubehandelnden Bereich 28 zur Vorbehandlung im Sinne der vorliegenden Erfindung aufgetragen werden.

Anschließend wird das zweite Material bzw. Bauteil (Ventilelement 12) unmittelbar gegen das erste Material bzw. Bauteil 6 gespritzt und dadurch mit diesem verbunden. Grundsätzlich kann auch eine sonstige Verbindung, beispielsweise durch Kleben, Schweißen o. dgl. in Betracht kommen. Vorzugsweise wird der vorbehandelte Bereich 28 vollständig von dem zweiten Material überdeckt oder eingeschlossen, mit Ausnahme eines Auslasses und/oder Einlasses, soweit vorgesehen. Die Abdeckung bzw. Folie 29 wird im Bereich der Abgabeöffnung 13 vorzugsweise mechanisch, bei der Herstellung und/oder durch die Flüssigkeit 2 bei der ersten Ausgabe geöffnet. Durch die vorschlagsgemäße Vorbehandlung im Bereich 28 wird erreicht, daß eben gerade keine Verbindung bzw. (feste) Anhaftung des zweiten Materials bzw. Bauteils (Ventilelement 12) am ersten Material bzw. Bauteil 6 bzw. an der Beschichtung, Zwischenlage oder Folie 29 erfolgt. Vielmehr kann sich das zweite Material bzw. Bauteil (Ventilelement 12) - ausschließlich- im vorbehandelten Bereich 28 wieder abheben oder lösen.

Beim Darstellungsbeispiel ist der Vorbehandlungsbereich 28 vorzugsweise streifenartig ausgebildet und/oder erstreckt sich von der Abgabeöffnung 13 zum Abgabeende 11. Jedoch sind auch andere konstruktive Lösungen möglich.

Besonders bevorzugt wird zurächst ein Rohling aus dem ersten Material gespritzt. Anschließend wird eine Folie 29 - insbesondere durch Heizprägetechnik - in dem gewünschten Vorbehandlungsbereich 28 aufgeprägt, der später keine Verbindung mit einer weichen Komponente eingehen soll. Anschließend wird die weiche Komponente auf die erste Komponente bzw. Hartkomponente gespritzt, insbesondere so daß die Beschichtung, Zwischenlage oder Folie 29 zumindest im wesentlichen komplett mit eingegossen wird. Anstelle der bevorzugten Heizprägetechnik kann auch ein Bedrucken oder Einlegen eines entsprechenden Zwischenelements, wie einer Zwischenlage oder Folie 29, zur gewünschten Vorbehandlung im Bereich 28 erfolgen.

Insbesondere ist es möglich und vorgesehen, das zweite Material unmittelbar und vollflächig gegen das erste Material bzw. die davon gebildete Oberfläche oder Wandung 14 zu spritzen oder in sonstiger Weise aufzubringen. Aufgrund der nur bereichsweisen Vorbehandlung erfolgt dann vorzugsweise eine Haftung bzw. Verbindung nur außerhalb des vorbehandelten Bereichs 28. Das zweite Bauteil bzw. Ventilelement 12 kann sich also dann wieder von dem ersten Material in dem vorbehandelten Bereich 28 lösen, beispielsweise abgehoben werden o. dgl., insbesondere um einen Kanal für die Flüssigkeit 2 oder ein daraus gebildetes Produkt, wie einen Schaum, oder ein Ventil, einen Auslaßkanal o. dgl. zu bilden. So wird eine sehr einfache Herstellung und auf einfache Weise die Festlegung gewünschter Verbindungsbereiche 21 ermöglicht.

Es ist grundsätzlich anzumerken, daß der Begriff "feste" Verbindung bei der vorliegenden Erfindung vorzugsweise im Sinne einer chemischen und/oder dichten Verbindung zu verstehen ist,

Es ist anzumerken, daß die oben beschriebene, vorschlagsgemäße Herstellung auch bei sonstigen Bauteilen eine Abgabevorrichtung 1, insbesondere also nicht nur bei Ventilkomponenten o. dgl., eingesetzt werden kann.

Bei allen Ausführungsformen liegt gemäß einem bevorzugten Aspekt das Ventilelement 12 vorzugsweise gleichmäßig bzw. vollflächig auf dem Bauteil 6 bzw. dessen Wandung 14 - insbesondere auch entlang des "virtuellen" Ausgabekanals - ausgehend von der Abgabeöffnung 13 zum Abgabeende 11 hin auf.

Erst bei der Flüssigkeitsabgabe wird das Ventilelement 12 entlang dieses virtuellen Auslaßkanals vom Bauteil 6 bzw, der Wandung 14 elastisch abgehoben (dies ist möglich, da sich das zweite Material 16 mit dem ersten Material 15 des Bauteils 6 durch die genannte Vorbehandlung nicht fest verbindet) und dadurch der Auslaßkanal freigegeben bzw. geöffnet.

Nach beendeter Flüssigkeitsabgabe schließt das Auslaßventil 10 bzw. Ventilelement 12 aufgrund der elastischen Rückstellkräfte vorzugsweise wieder selbsttätig.

Besonders bevorzugt sind der Anschlag 23 einerseits und der Förderkanal 7 bzw. dessen Abgabeöffnung 13 andererseits beabstandet voneinander und insbesondere an entgegengesetzten Endbereichen des von dem Ventilelement 12 bei geöffnetem Auslaßventil 10 gebildeten "virtuellen Auslaßkanals" angeordnet.

Insbesondere dient der Anschlag 23 einem Verschließen des Auslaßventils 10 in einem Bereich des Ventilelements 12, der derart beabstandet von der Abgabeöffnung 13 ist, daß das Ventilelement 12 unabhängig vom Anschlag 23 die Abgabeöffnung 13 insbesondere aufgrund entsprechender elastischer Rückstellkräfte verschließen kann. Es ergibt sich insbesondere eine Art Doppelventil bzw. eine besonders gute Abdicht- oder Schließwirkung.

Der Anschlag 23 wirkt bei allen Ausführungsformen insbesondere auch oder im wesentlichen als dem Auslaßventil 10 bzw. Ventilelement 12 zugeordnetes Schließ- bzw, Rückstellelement. Der Begriff "Anschlag" ist vorzugsweise dementsprechend generell auch in diesem Sinne zu verstehen.

Die verschiedenen Ausführungsformen sowie einzelne Merkmale und konstruktive Lösungen der Ausführungsformen können auch beliebig miteinander kombiniert, aber auch unabhängig voneinander bzw. von der vorschlagsgemäßen Vorbehandlung und/oder bei sonstigen Abgabevorrichtungen eingesetzt werden.

### Bezugszeichenliste:

- 1: Abgabevorrichtung
- 2: Flüssigkeit
- 3: Behälter
- 4: Abgabeventil
- 5: Gehäuseteil
- 6: Bauteil
- 7: Förderkanal
- 8: Anschlußabschnitt
- 9: Stutzen
- 10: Auslaßventil
- 11: Abgabeende
- 12: Ventilelement
- 13: Abgabeöffnung
- 14: Wandung
- 15: Betätigungselement
- 16: Betätigungsabschnitt
- 17: Schwenkachse
- 18: Lagerauge
- 19: Halteabschnitt
- 20: Steigleitung
- 21: Verbindungsbereich
- 22: Rand
- 23: Anschlag
- 24: Federabschnitt
- 25: Verbindungsmittel
- 26: Randverstärkung
- 27: Ausnehmung
- 28: Vorbehandlungsbereich
- 29: Folie

## Patentansprüche

1. Abgabevorrichtung (1) für eine vorzugsweise kosmetische Flüssigkeit (2), wobei ein erstes Bauteil (6) in einem Bereich (28) vorbehandelt ist und wobei ein zweites Bauteil, insbesondere ein Ventilelement (12), unmittelbar gegen das erste Bauteil (6) gespritzt oder geklebt und dadurch mit diesem fest verbunden ist,
**dadurch gekennzeichnet,**
**dass** die beiden Bauteile (6) im vorbehandelten Bereich (28) nicht verbunden und ausschließlich im vorbehandelten Bereich (28) voneinander lösbar sind, und dass die Bauteile (6) aus unterschiedlichen Materialien bestehen, die durch Anspritzen ohne Vorbehandlung miteinander fest, chemisch und/oder dicht verbindbar sind.

2. Abgabevorrichtung nach Anspruch 1, **dadurch gekennzeichnet, dass** das erste Bauteil (6) durch Aufbringen einer Beschichtung, Zwischenlage oder Folie (29) vorbehandelt ist.

3. Abgabevorrichtung nach Anspruch 2, **dadurch gekennzeichnet, dass** die Beschichtung, Zwischenlage oder Folie (29) mit dem ersten Bauteil (6) fest verbunden ist.

4. Abgabevorrichtung nach Anspruch 2 oder 3, **dadurch gekennzeichnet, dass** die Beschichtung, Zwischenlage oder Folie (29) mit dem zweiten Bauteil nicht verbunden ist.

5. Abgabevorrichtung nach einem der voranstehenden Ansprüche, **dadurch gekennzeichnet, dass** die beiden Bauteile (6) vorzugsweise ausschließlich in einem ringförmigen oder U-förmigen Bereich (21) miteinander fest verbunden sind.

6. Abgabevorrichtung nach einem der voranstehenden Ansprüche, **dadurch gekennzeichnet, dass** das erste Bauteil (6) eine Oberfläche oder Wandung (14) bildet, auf der das zweite Bauteil flächig aufliegt und/oder mit der das zweite Bauteil bereichsweise verbunden ist.

7. Abgabevorrichtung nach Anspruch 6, **dadurch gekennzeichnet, dass** die Flüssigkeit (2) bzw. das davon gebildete Produkt zwischen den beiden flächig aufliegenden Bauteilen (6) durch entsprechende elastische Verformung mindestens eines Bauteils (6) ausgebbar ist.

8. Abgabevorrichtung nach einem der voranstehenden Ansprüche, **dadurch gekennzeichnet, dass** bei elastischer Verformung mindestens eines Bauteils (6) zwischen der beiden Bauteilen (6) - insbesondere nur im vorbehandelten Bereich (28) - ein Auslaßkanal für die Flüssigkeit (2) gebildet oder geöffnet wird.

9. Abgabevorrichtung nach einem der voranstehenden Ansprüche, **dadurch gekennzeichnet, dass** die Bauteile (6) ein Auslaßventil (10) bilden.

10. Abgabevorrichtung nach einem der voranstehenden Ansprüche, dadurch gekenntzeichnet, dass die Abgabevorrichtung ein Gehäuseteil (5) aufweist, wobei das erste Bauteil (6) nicht einstückig mit dem Gehäuseteil (5) ausgebildet ist, sondern als separates Bauteil.

11. Abgabevorrichtung nach Anspruch 10, **dadurch gekennzeichnet, dass** das erste Bauteil (6) unlösbar, rastend und/oder klemmend mit dem Gehäuseteil (5) verbindbar ist, insbesondere wobei dass zur Verbindung des ersten Bauteils (6) mit dem Gehäuseteil (5) Verbindungsmittel vorgesehen sind, die am Gehäuseteil (5) und/oder ersten Bauteil (6) angeordnet, angebracht oder angeformt und mit dem jeweils anderen Teil verbindbar sind.

12. Abgabevorrichtung nach einem der voranstehenden Anspruche, **dadurch gekennzeichnet, dass** die Abgabevorrichtung (1) einen Abgabekopf für die Flüssigkeit (2) bzw. ein davon gebildetes Produkt, wie Schaum oder Gel, aus einem unter Druck stehenden oder setzbaren Behälter (3) aufweist oder bildet, insbesondere wobei der Behälter (3) ein Abgabeventil (4) aufweist, mit dem der Abgabekopf verbunden ist.

13. Verfahren zur Herstellung einer Abgabevorrichtung (1) für eine vorzugsweise kosmetische Flüssigkeit (2), wobei ein erstes Material zumindest bereichsweise vorbehandelt wird und wobei ein zweites Material unmittelbar gegen das vorbehandelte, erste Material gespritzt und dadurch mit diesem chemisch und/oder fest verbunden wird,
**dadurch gekennzeichnet,**
**dass** die beiden Materialien durch die Vorbehandlung im vorbehandelten Bereich (28) nicht miteinander verbunden werden und dort wieder voneinander lösbar sind, und dass die unterschiedlichen Materialien durch Anspritzen ohne Vorbehandlung miteinander fest, chemisch und/oder dicht verbunden werden.

14. Verfahren nach Anspruch 13, **dadurch gekennzeichnet, dass** das erste Material durch Aufbringen einer Beschichtung, Zwischenlage oder Folie (29) vorbehandelt wird.

15. Verfahren nach Anspruch 13 oder 14, **dadurch gekennzeichnet, dass** aus dem ersten Material zunächst ein erstes Bauteil (6) gespritzt, dass anschließend in einem gewünschten Vorbehandlungsbereich (28) eine Beschichtung oder Folie (29), insbesondere durch Heißprägen, aufgebracht wird und dass schließlich die Beschichtung oder Folie (29) durch das zweite Material überspritzt wird, so dass aus dem zweiten Material ein zweites Bauteil gebildet wird, das sich im vorbehandelten Bereich (28) von dem ersten Bauteil (6) und/oder der Beschichtung oder Folie (29) wieder lösen und insbesondere in einem das erste Material direkt überdeckenden Bereich (21) nicht abheben oder lösen kann.

## Claims

1. Dispensing device (1) for a preferably cosmetic fluid (2), in which a first component (6) is pre-treated in a region (28) and in which a second component, in particular a valve element (12), is directly moulded on or adhesively attached to the first component (6) and thus fixedly connected to the same,
**characterized in**
**that** the two components (6) are not connected in the pre-treated region (28) and are detachable from one another exclusively in the pre-treated region (28), and that the components (6) consist of different materials which are fixedly, chemically and/or tightly connectable to one another by moulding without pre-treatment.

2. Dispensing device according to Claim 1, **characterized in that** the first component (6) is pre-treated by the application of a coating, intermediate layer or film (29).

3. Dispensing device according to Claim 2, **characterized in that** the coating, intermediate layer or film (29) is fixedly connected to the first component (6).

4. Dispensing device according to Claim 2 or 3, **characterized in that** the coating, intermediate layer or film (29) is not connected to the second component.

5. Dispensing device according to one of the preceding claims, **characterized in that** the two components (6) are fixedly connected to one another preferably exclusively in an annular or U-shaped region (21).

6. Dispensing device according to one of the preceding claims, **characterized in that** the first component (6) forms a surface or wall (14) on which the second component lies flat and/or to which the second component is regionally connected.

7. Dispensing device according to Claim 6, **characterized in that** the fluid (2) or the product made therefrom is dispensable between the two components (6) which lie flat on one another by means of a corresponding elastic deformation of at least one component (6).

8. Dispensing device according to one of the preceding claims, **characterized in that**, in the event of an elastic deformation of at least one component (6), an outlet conduit for the fluid (2) is formed or opened between the two components (6) - in particular only in the pre-treated region (28).

9. Dispensing device according to one of the preceding claims, **characterized in that** the components (6) form an outlet valve (10).

10. Dispensing device according to one of the preceding claims, **characterized in that** the dispensing device has a housing part (5) in which the first component (6) is not formed integrally with the housing part (5), but as a separate component.

11. Dispensing device according to Claim 10, **characterized in that** the first component (6) is connectable to the housing part (5) in a non-detachable, latching and/or clamping manner, in particular **in that** connection means are provided for the connection of the first component (6) to the housing part (5), said connection means being located on, attached to or moulded on the housing part (5) and/or the first component (6) and being connectable to the other part respectively.

12. Dispensing device according to one of the preceding claims, **characterized in that** the dispensing device (1) has or forms a dispensing head for the fluid (2) or a product made therefrom, such as foam or gel, from a container (3) which is, or can be, pressurized, in particular **in that** the container (3) has a dispensing valve (4) to which the dispensing head is connected.

13. Method for the manufacture of a dispensing device (1) for a preferably cosmetic fluid (2), in which a pretreated, first material is at least regionally pre-treated and a second material is directly moulded on the pretreated, first material and is thus chemically and/or fixedly connected to it,
**characterized in**
**that** the two materials are not connected to one another in the pre-treated region (28) as a result of the pre-treatment, and are detachable again from one another there, and in that the different materials are fixedly, chemically and/or tightly connected to one another by moulding without pre-treatment.

14. Method according to Claim 13, **characterized in that** the first material is pretreated by the application of a coating, intermediate layer or film (29).

15. Method according to Claim 13 or 14, **characterized in that** a first component (6) is initially moulded from the first material, **in that** subsequently a coating or film (29) is applied, in particular by hot stamping, in a desired pre-treatment region (28), and **in that** finally the coating or film (29) is overmoulded with the second material, such that the second material forms a second component which is detachable again in the pre-treated region (28) from the first component (6) and/or the coating or film (29), and in particular cannot lift off or be detached in a region (21) which directly covers the first material.

## Revendications

1. Dispositif de distribution (1) pour un liquide de préférence cosmétique (2), un premier composant (6) étant prétraité dans une région (28) et un deuxième composant, en particulier un élément de soupape (12), étant directement moulé ou collé contre le premier composant (6) et étant de ce fait connecté fixement à celui-ci,
**caractérisé en ce que**
les deux composants (6) dans la région prétraitée (28) ne sont pas connectés et peuvent être séparés l'un de l'autre exclusivement dans la région prétraitée (28), et **en ce que** les composants (6) se composent de matériaux différents qui peuvent être connectés fixement, de manière chimique et/ou hermétique les uns aux autres par moulage sans prétraitement.

2. Dispositif de distribution selon la revendication 1, **caractérisé en ce que** le premier composant (6) est prétraité par application d'un revêtement, d'une couche intermédiaire ou d'un film (29).

3. Dispositif de distribution selon la revendication 2, **caractérisé en ce que** le revêtement, la couche intermédiaire ou le film (29) est connecté(e) fixement au premier composant (6).

4. Dispositif de distribution selon la revendication 2 ou 3, **caractérisé en ce que** le revêtement, la couche intermédiaire ou le film (29) n'est pas connecté(e) au deuxième composant.

5. Dispositif de distribution selon l'une quelconque des revendications précédentes, **caractérisé en ce que** les deux composants (6) sont connectés fixement l'un à l'autre exclusivement dans une région (21) de forme annulaire ou en forme de U.

6. Dispositif de distribution selon l'une quelconque des revendications précédentes, **caractérisé en ce que** le premier composant (6) forme une surface ou une paroi (14) sur laquelle repose à plat le deuxième composant et/ou à laquelle le deuxième composant est connecté en partie.

7. Dispositif de distribution selon la revendication 6, **caractérisé en ce que** le liquide (2) respectivement le produit formé par celui-ci entre les deux composants reposant à plat (6) peut être évacué par déformation élastique correspondante d'au moins un composant (6).

8. Dispositif de distribution selon l'une quelconque des revendications précédentes, **caractérisé en ce que** lors de la déformation élastique d'au moins un composant (6), un canal de sortie pour le liquide (2) est formé ou est ouvert entre les deux composants (6) - en particulier seulement dans la région prétraitée (28).

9. Dispositif de distribution selon l'une quelconque des revendications précédentes, **caractérisé en ce que** les composants (6) forment une soupape de sortie (10).

10. Dispositif de distribution selon l'une quelconque des revendications précédentes, **caractérisé en ce que** le dispositif de distribution présente une partie de boîtier (5), le premier composant (6) n'étant pas réalisé d'une seule pièce avec la partie de boîtier (5) mais sous forme de composant séparé.

11. Dispositif de distribution selon la revendication 10, **caractérisé en ce que** le premier composant (6) peut être connecté de manière indesserrable, par encliquetage et/ou par serrage à la partie de boîtier (5), en particulier **en ce que** pour la connexion du premier composant (6) à la partie de boîtier (5), des moyens de liaison sont prévus, lesquels sont disposés, installés ou façonnés sur la partie de boîtier (5) et/ou le premier composant (6) et peuvent être connectés à l'autre partie respective.

12. Dispositif de distribution selon l'une quelconque des revendications précédentes, **caractérisé en ce que** le dispositif de distribution (1) présente ou forme une tête de distribution pour le liquide (2) ou pour un produit formé par celui-ci, comme de la mousse ou du gel, hors d'un récipient (3) sous pression ou pouvant être pressurisé, en particulier **en ce que** le récipient (3) présente une soupape de distribution (4) à laquelle la tête de distribution est connectée.

13. Procédé de fabrication d'un dispositif de distribution (1) pour un liquide (2) de préférence cosmétique, un premier matériau étant prétraité au moins en partie et un deuxième matériau étant moulé directement contre le premier matériau prétraité et étant de ce fait connecté chimiquement et/ou fixement à celui-ci,
**caractérisé en ce que**
les deux matériaux ne sont pas connectés l'un à l'autre par le prétraitement dans la région prétraitée (28) et peuvent être séparés l'un de l'autre à nouveau à cet endroit, et **en ce que** les différents matériaux sont connectés fixement, de manière chimique et/ou hermétique les uns aux autres par moulage sans prétraitement.

14. Procédé selon la revendication 13, **caractérisé en ce que** le premier matériau est prétraité par application d'un revêtement, d'une couche intermédiaire ou d'un film (29).

15. Procédé selon la revendication 13 ou 14, **caractérisé en ce qu'**à partir du premier matériau tout d'abord un premier composant (6) est moulé, **en ce qu'**ensuite dans une région de prétraitement souhaitée (28), un revêtement ou un film (29) est appliqué en particulier par gaufrage à chaud, et **en ce que** finalement le revêtement ou le film (29) est surmoulé avec le deuxième matériau, de telle sorte qu'un deuxième composant soit formé par le deuxième matériau, lequel peut être séparé à nouveau du premier composant (6) et/ou du revêtement ou du film (29) dans la région prétraitée (28) et de préférence ne peut pas se soulever ou se détacher notamment dans une région (21) recouvrant directement le premier matériau.
